Europäisches Patentamt

European Patent Office

Office européen des brevets

(11) Publication number: **0 445 466 A2**

# EUROPEAN PATENT APPLICATION

(21) Application number: 90312864.3

(22) Date of filing: 27.11.90

(51) Int. Cl.⁵: **B60T 8/50**, B60T 8/36

(30) Priority: 01.12.89 GB 8927180

(43) Date of publication of application:
11.09.91 Bulletin 91/37

(84) Designated Contracting States:
DE FR GB IT SE

(71) Applicant: WABCO AUTOMOTIVE CLAYTON
DEWANDRE AFTERMARKET LIMITED
(WACDAL)
90 Newbold Road
Rugby, Warwickshire CV21 1NL(GB)

(72) Inventor: McCullagh, Michael Gerard
76 Hawthorn Road, Reepham
Lincoln LN34DU(GB)

(74) Representative: Hartley, David
Withers & Rogers 4 Dyer's Buildings Holborn
London, EC1N 2JT(GB)

(54) Anti-lock braking systems.

(57) A change-over valve for use in an antilock braking system to introduce a restriction in the supply and/or exhaust flows at onset of the ABS mode. Different restrictions may be imposed in the supply and exhaust flows to modify pressure rise and decay rate characteristics in a hydraulic system so that an ECU having its algorithm tailored to suit the slower pneumatic systems can be used. In contrast to prior art solutions the change-over device is operated directly in response to a change of pressure to introduce a restriction in series with the modulator valve and is a balanced valve yielding good response and minimum hysteresis.

EP 0 445 466 A2

## ANTI-LOCK BRAKING SYSTEMS

This invention relates to a change-over valve and more particularly to a change-over valve for use in hydraulic anti-lock braking systems (ABS) on vehicles especially commercial vehicles with a high pressure hydraulic system.

A feature of a high pressure, closed centre (accumulator at 170 bar) braking system is the much faster response than may be achieved with a comparable pneumatic CV braking system. For many years ABS has been available for the pneumatic systems, the electronic control for which has reached a very high degree of sophistication after years of research. This same ECU with the same production wheel sensors, can and has been used successfully on a commercial vehicle fitted with a closed centre hydraulic braking system. The only drawback is the necessity to reduce the pressure rise and decay rates in the brake lines to be comparable with those for an ECU which has its algorithm tailored to the slower pneumatic systems.

EP-A-0329333 relates to a pilot operated hydraulic anti-lock modulator for use in hydraulic anti-lock systems and refers to the need for an orifice or other restriction in the supply and return lines of a solenoid operated modulator, whether used solo for light vehicles or in the form of a pilot controlled solenoid operated modulator for heavier duty, to optimise the rise and decay rates for the electronic control unit (ECU) mode. It is current practice to fit these restrictors within the modulator, One disadvantage however, is that they detract from the ultimate response available during normal braking which is a serious compromise to make for the very occasional use of ABS.

One object of the present invention is to accommodate the conflicting requirements for normal braking and those for anti-lock braking systems; to maintain the maximum response of the hydraulic braking system at the level it would be without ABS modulators fitted in the lines.

What we propose in accordance with the present invention is a vehicle braking system including a modulator such as a solenoid operated modulator, for anti-lock modulation of pressure supplied to the brakes under control of an ECU comprising change-over operable in response to a change in hydraulic pressure at onset of the ABS mode to introduce a restriction in the fluid pressure supply and/or exhaust flows. Hence, under normal braking the full flow potential of the system is available at the brakes but with the initial signal from the ECU the flow restriction, preferably an orifice of the required size selected to impose an appropriate delay, comes into effect.

One changeover means may be connected in the line communicating the modulator output pressure to the brake actuators and along which both of the brake actuator supply and exhaust flows pass. In that case, the same restriction is imposed upon the two flows in the ABS mode, yielding the same rise and decay rate characteristics.

Different rise and decay rate characteristics can be imposed, however, by connecting one change-over valve in the supplied pressure line upstream of the modulator and another change-over valve in an exhaust line downstream of the modulator. The two change-over valves may have or introduce different restrictions selected as required to suit the desired operating conditions; more particularly to suit an ECU which may have its algorithm tailored to a slower pneumatic ABS system.

According to this invention, an anti-lock control system for the brakes of a motor vehicle comprises a modulator for anti-lock modulation of fluid under pressure supplied to one or more brake actuators under the control of signals generated by a control unit in dependence upon the rotary behaviour of an associated wheel or wheels and comprises change-over means operable in response to a change in fluid pressure at onset of the ABS mode to introduce a flow restriction in the brake actuator fluid pressure supply and/or exhaust flows.

Also according to this invention, a vehicle braking system comprises a braking circuit having at least one wheel brake actuator to which brake fluid under pressure is supplied on demand during normal braking, an electrical control unit for generating control signals in dependence upon the rotary behaviour of an associated vehicle wheel or wheels, a modulator connected to receive said supplied pressure and operable in response to said control signals in an ABS mode for controlling brake actuator supply and exhaust flows to deliver a modulator output to the said at least one brake actuator, and change-over means connected in at least one of the brake actuator supply and exhaust flows and operable in response to a change in fluid pressure at onset of the ABS mode to introduce a flow restriction in the said at least one of brake actuator supply and exhaust flows.

The change-over means preferably comprises a balanced valve having an inlet for the fluid flow to be controlled, an outlet port and a valve element for controlling communication between the inlet and outlet port and movable in response to a difference in pressure between the said supplied pressure and the modulator output pressure, to introduce the said flow restriction.

In a preferred embodiment, the change-over valve comprises a spool or other valve element movable in response to an imbalance of pressures applied to the inlet port and a control signal port to introduce a restriction in the flowpath from the inlet port to the outlet port.

The spool preferably incorporates two flowpaths, one with and one without a restriction and is movable as stated above between positions wherein the inlet and outlet ports are connected by one or other of the said flowpaths. The said supplied pressure is connected to act on the spool in one direction and the said modulator output pressure is connected to act on the spool in the opposite direction, the spool being biased toward a position wherein the flow to be controlled is unrestricted.

Where the solenoid operated modulator comprises a pilot operated hydraulic modulator under control of a solenoid valve the delivery port of which is connected to provide the pilot signal as described for example, in EP-A- 0329333 the control signal port of the change-over valve may be connected either to the modulator output or the pilot signal.

The change-over valve being in series with the pilot operated hydraulic modulator valve, has no effect on the performance of the solenoid valves. This change-over valve may only be required for the inlet valve of the modulator, as the outlet valve is not in operation during normal braking.

Among prior art proposals addressing the problem of restricting flow when ABS is fitted, many are activated by a solenoid provided for the purpose. GB-A-l 486 019 discloses a hydraulically activated control whereby an unrestricted passage in parallel with the flow is closed by means of a poppet valve leaving the restriction inherent within the solenoids to effect regulation for ABS.

By contrast the change-over means of the present invention operates directly as a result of a pressure differential without having to use a shunt valve. Also because the valve is balanced good response and minimum hysteresis is ensured.

In the event of a step change in surface friction, unlike the prior proposals where the input pressure to the device has to fall to a low value before the valve returns to the full flow position, the change-over valve of the invention returns to the full flow position immediately there is no differential across the spool valve. This means the foot does not have to be released before the valve returns to the full flow condition, provided the wheels are no longer in the "ASS" mode because of the higher surface friction.

Embodiments of the invention will now be described by way of example with reference to the accompanying drawings which:

Figures 1 to 3 are diagrams representing an anti-lock braking system including a pilot operated hydraulic modulator under control of solenoid valves and a change-over valve in accordance with the invention;

Figure 4 is a diagram of the system shown in Figures 1 to 3 but in the transient phase during ABS cycling;

Figure 5 and 6 are diagrams of the system of Figures 1 to 4 but including schematic cross-sections of a pilot operated hydraulic modulator incorporating a change-over valve in accordance with the invention, respectively in its non-restricting and restricting positions; and

Figure 7 to 9 are diagrams similar to Figures 1 to 3 representing an anti-lock braking system including a solenoid operated modulator (including inlet and outlet solenoid valves) in the solo mode.

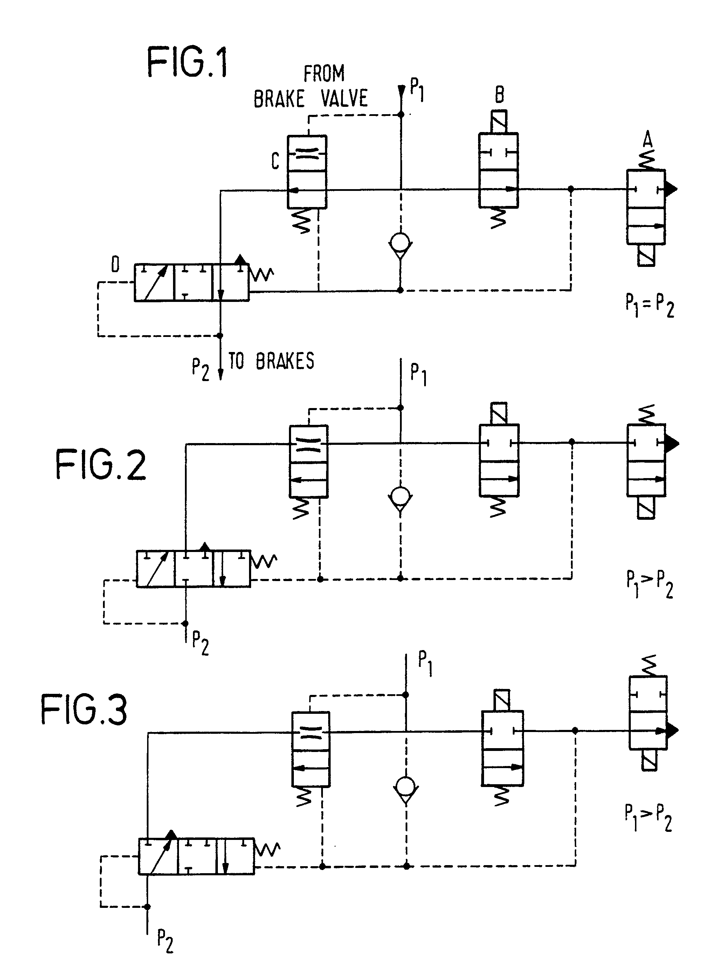

An assembly of two solenoid operated valves and pilot operated modulator combinations, such as shown in Figure 3 of EP-A-0329333 the disclosure of which is incorporated herein by reference, is capable of providing anti-lock control for a complete axle of a vehicle with a vertical split braking system front to rear. Each solenoid valve functions as a pilot valve controlling the slave modulator so that the assembly takes advantage of the fast performance of the solenoid valve and large fluid flow capacity of the modulator.

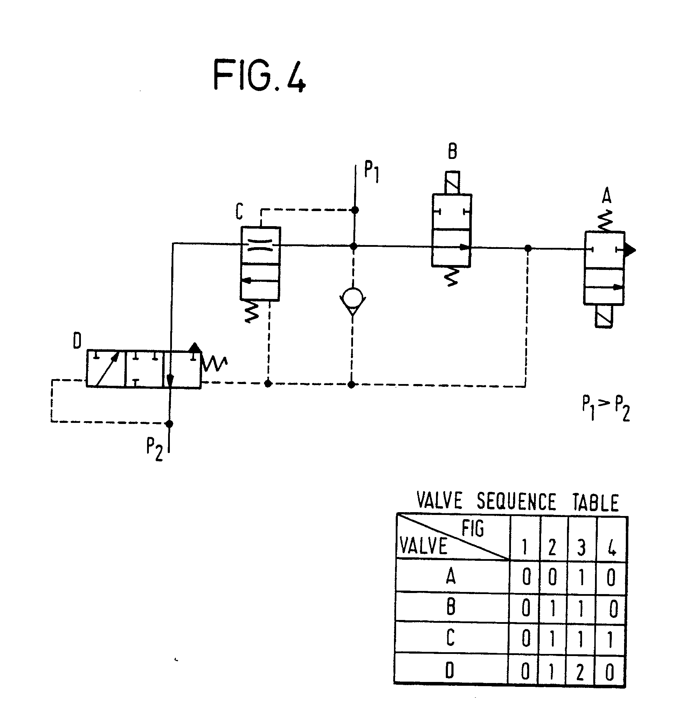

When used for modulation of automotive brake pressure in an anti-lock braking system, the assembly is inserted in the feed from the (foot) brake valve to the brake actuator(s), the fluid pressure from the brake valve being fed to a supply port and delivery to a delivery port corresponding to the two wheel brakes of an axle assembly. As shown diagrammatically in Figures 1 to 4 each solenoid valve incorporates a normally open inlet valve B and a normally closed exhaust valve A and may be housed in a body also containing the associated pilot operated (slave) modulator D.

Brake valve pressure $P_1$, applied at the supply port is connected to the inlet valve B and via a change-over valve C to the modulator D.

The solenoid valve has three states according to electrical signals received from the control unit of the anti-lock braking system (not shown),

(a) the brake pressure $P_1$ passes through the normally open inlet valve B to the solenoid delivery. (inlet valve B open/exhaust valve A closed);

(b) with supply pressure $P_1$ rising, the solenoid delivery pressure is held to a lower value. (inlet valve B closed/exhaust valve A closed);

(c) irrespective of the supply pressure $P_1$ at the solenoid delivery pressure is reduced by a certain amount by dumping fluid through the exhaust valve A communicating with a reservoir circuit (not shown), (inlet valve closed/exhaust valve open).

These three states relate to the three braking pressure conditions for anti-lock modulation;

(a) pressure to brakes;

(b) pressure at brakes held; and

(c) pressure at brakes dumped.

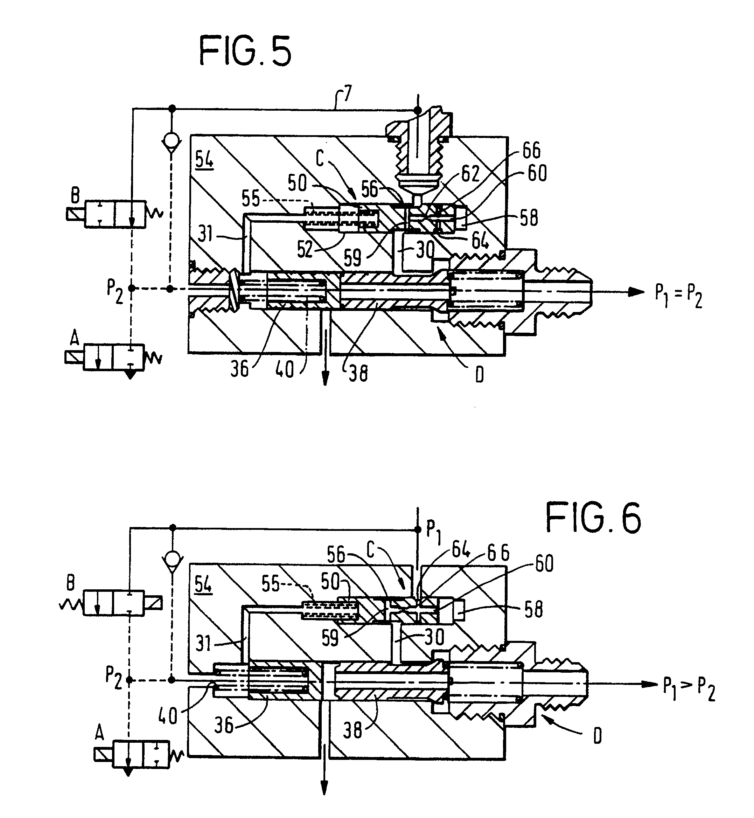

Conditions (a) and (c) will normally be concerned with pulsing the pressure up or down according to wheel skid. The solenoid valve A/B operates as a pilot with the slave modulator D producing the variation or brake pressure according to wheel skid. The pilot operated control valve D is connected to the supply pressure $P_1$ through a change-over valve C to be described below and as will be seen in Figures 5 and 6 has provision for supply 30, pilot signal 31 (provided by the solenoid valve delivery), delivery 32 and exhaust flows 34. An exhaust piston 38 travels in response to pilot signal pressure and during part of its travel controls travel of a delivery piston 36 away from a stopped position toward which the delivery piston is biased by spring 40. The pilot signal 31 and a biasing spring 40 acts on one end of the exhaust piston 38 in opposition to the supply pressure acting on the other end of exhaust piston 38 and also on both ends of the delivery piston 36. During part of its travel the exhaust piston 38 controls the travel of the delivery piston 36 between an open position wherein supply 30 is connected to delivery 32, and the stopped position wherein the supply is shut-off and delivery held, the remaining exhaust piston travel being to a position wherein delivery is connected to exhaust.

As will be understood, such a valve has three distinct and stable positions (supply to delivery, delivery held, and delivery to exhaust) determined by the pilot signal pressure and the effort/travel characteristics of the two pistons. It can therefore imitate as a slave unit, the pressure modulations of a three-state anti-lock solenoid valve but with increased fluid flow.

The change-over valve C through which the pressure $P_1$ delivered by the brake valve, is connected to the supply 30 of the pilot operated modulator D and comprises a spool 50 running in a bore 52 in the body 54. A spring 55 biases the spool 50 toward the quiescent position shown in Figure 5 wherein the full flow potential communicates with supply port 30 through a circumferential groove 56 in the spool; no flow restriction is imposed. The pressure $P_1$ (30) is also sensed in a small chamber 58 connected to a transverse drilling 59 communicating with the groove 56 by an axial drilling 60 incorporating a restricted orifice 62. At the same time the solenoid delivery pressure providing the pilot signal 31 acts on the left hand of the spool 50 to maintain the spool in the quiescent position shown.

A second circumferential groove 64 spaced from the groove 56 by a distance equal to the travel of the spool which is such that the groove 56 is always in communication with the modulator supply 30, is also connected via a transverse drilling 66 to the restricted flowpath incorporating the orifice 62.

At the commencement of the anti-skid cycle the inlet solenoid valve closes thus preventing any further rise in pilot signal pressure 3l whilst at the same time the pressure in 22 and 30 will continue to rise. This will have the effect of unbalancing the orificed spool and the higher pressure attained in chamber 58 will overcome the pilot signal pressure 32 and the spring force to move the orificed spool 52 leftwise. In this position, which will be maintained during the whole of the ABS control, the oil has to flow through orifice 66 into the delivery chamber 30 and then, upon demand of the ECU, into the brake lines. The sizing of the restrictor, typically between 0.6.mm for the smaller vehicles, and 1.6.mm for larger vehicles, will be determined depending upon the compliance of the foundation brakes to give optimum pressure gradient for the vehicle and the ECU being used.

A feature of the illustrated embodiment is the simple nature of the change-over valve which operates automatically upon a pressure differential across the spool when the modulator is activated. The one piece spool contains the orifice, the size of which would be determined by the displacement of the wheel or axle it is serving. In the normal brake position, the spool is held in the rightwise position by a light spring, because the spool is in hydraulic balance, as the delivered pressure is fed through the normally open inlet solenoid valve to the left side as well as to the right side. The spool remains in this rest position, which gives unrestricted flow for all non-ABS braking, until the solenoids are activated for ABS cycling, whereupon the pressure on the right side rises above that of the left side, because the inlet valve has closed and the outlet valve has opened. The right side of the spool valve, sensing the delivered pressure from the brake valve, which is always higher than that at the wheels during ASS, and therefore maintains the spool in the leftwise position during the whole ABS cycle, even during the transient opening of the inlet solenoid. Immediately the cycling has finished the solenoid inlet valve B will remain open and the outlet valve A closed, and equilibrium returns to the spool. The return spring moves the spool to its rest and full flow position. Low spool valve friction ensures a quick response to a change in pressure and with only a lightly loaded spring required, the operating differential is kept to a minimum to ensure operation on low friction surfaces.

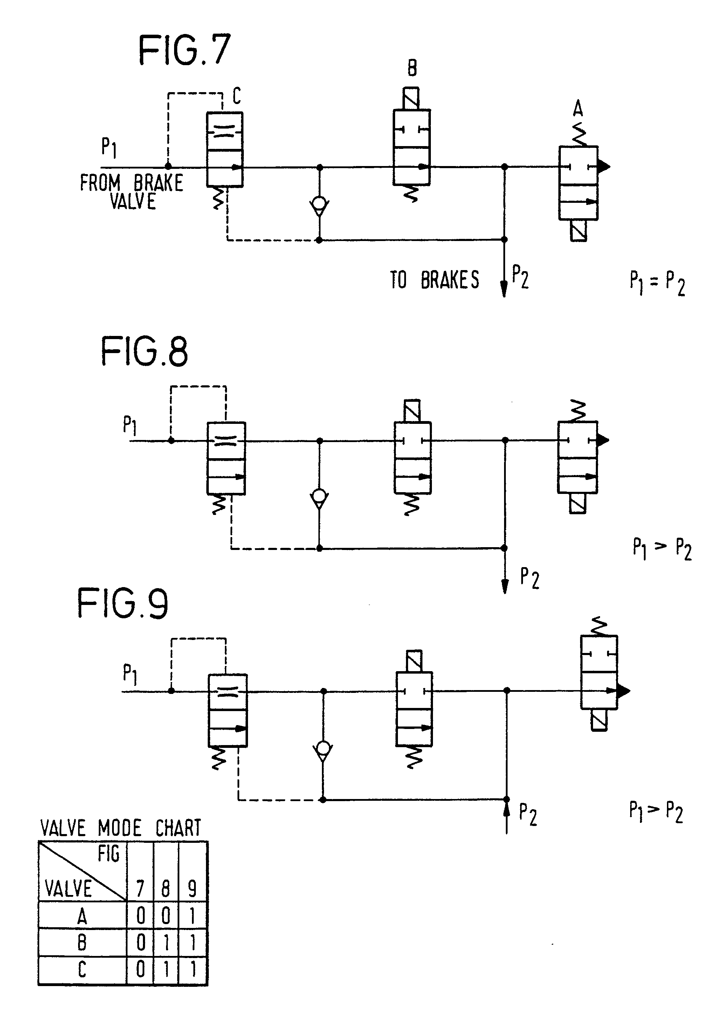

Figures 7 to 9 are similar to the diagram of

4

Figures 1 to 3 but show a system in which the solenoid valve A/B is used solo. In all other respects operation of this system is as described above.

It will be understood, that the outlet valve has similar constraints to that of the inlet and a similar spool could be employed to control the decay pressure gradients. The spool would be operated by the same pressure signals as the herein described spool, controlling the exhaust flow 34.

## Claims

1. An anti-lock control system for the brakes of a motor vehicle comprising a modulator for anti-lock modulation of fluid under pressure supplied to brake actuators under the control of signals generated by a control unit in dependence upon the rotary behaviour of an associated wheel or wheels and comprising change-over means operable in response to a change in fluid pressure at onset of the ABS mode to introduce a flow restriction in the fluid pressure supply and/or exhaust flows.

2. A vehicle braking system including a braking circuit having at least one wheel brake actuator to which brake fluid under pressure is supplied on demand during normal braking, an electrical control unit for generating control signals in dependence upon the rotary behaviour of an associated vehicle wheel or wheels, a modulator connected to receive said supplied pressure and operable in response to said control signals in an ABS mode for controlling brake actuator supply and exhaust flows to deliver a modulator output to the said at least one brake actuator, the system further comprising change-over means connected in at least one of the supply and exhaust flows and operable in response to a change in fluid pressure at onset of the ABS mode to introduce a flow restriction in the said at least one of supply and exhaust flows.

3. A system according to claim 1 or claim 2 wherein the change-over means comprises a balanced valve having an inlet for the fluid flow to be controlled, an outlet port and a valve element for controlling communication between the inlet and outlet port and movable in response to a difference in pressure between the said supplied pressure and the modulator output pressure, to introduce the said flow restriction.

4. A system according to claim 3 wherein the valve element is a spool valve incorporating two flowpaths one with and one without a flow restriction, and wherein the said supplied pressure is connected to act on the spool in one direction and the said modulated pressure is connected to act on the spool in the opposite direction, whereby the spool is movable in response to the said pressure difference at onset of the ABS mode to a position wherein communication between the inlet and outlet port is via the restricted flowpath.

5. A system according to any preceding claim wherein the change over means is biased toward a position wherein the flow to be controlled is unrestricted.

6. A system according to any preceding claim wherein the modulator has provision for fluid supply, delivery and exhaust flows and comprises a solenoid operated inlet valve connected to receive the said supplied pressure, and a solenoid operated exhaust valve together forming a solenoid operated modulator for controlling in response to the said control signals, communication respectively between the said supply and exhaust flows and a solenoid delivery port delivering the said modulator output pressure.

7. A system according to claim 6 wherein the modulator comprises in combination with the said solenoid operated modulator a pilot operated modulator having provision for supply, delivery and exhaust flows, the solenoid delivery port being connected to provide a pilot signal pressure to the pilot operated modulator.

8. A system according to any preceding claim wherein one change over device is connected in the supplied pressure line upstream of the modulator.

9. A system according to any preceding claim wherein one change over device is connected in an exhaust line downstream of the modulator.

5

# FIG.1

FROM
BRAKE VALVE

$P_1$

B

C

A

D

$P_2$ ↓ TO BRAKES

$P_1 = P_2$

# FIG.2

$P_1$

$P_2$

$P_1 > P_2$

# FIG.3

$P_1$

$P_2$

$P_1 > P_2$

# FIG.4

$P_1 > P_2$

VALVE SEQUENCE TABLE

| VALVE \ FIG | 1 | 2 | 3 | 4 |
|---|---|---|---|---|
| A | 0 | 0 | 1 | 0 |
| B | 0 | 1 | 1 | 0 |
| C | 0 | 1 | 1 | 1 |
| D | 0 | 1 | 2 | 0 |

# FIG.5

# FIG.6

# FIG.7

$P_1$

FROM BRAKE VALVE

C

B

A

TO BRAKES  $P_2$

$P_1 = P_2$

# FIG.8

$P_1$

$P_2$

$P_1 > P_2$

# FIG.9

$P_1$

$P_2$

$P_1 > P_2$

VALVE MODE CHART

| VALVE \ FIG | 7 | 8 | 9 |
|---|---|---|---|
| A | 0 | 0 | 1 |
| B | 0 | 1 | 1 |
| C | 0 | 1 | 1 |